Europäisches Patentamt

European Patent Office

Office européen des brevets

(11) Publication number: 0 190 399
A2

# EUROPEAN PATENT APPLICATION

(21) Application number: 85112781.1

(22) Date of filing: 09.10.85

(51) Int. Cl.⁴: H 04 Q 9/00
G 06 F 15/74

(30) Priority: 08.02.85 ES 540269
08.02.85 ES 540270

(43) Date of publication of application:
13.08.86 Bulletin 86/33

(84) Designated Contracting States:
AT BE CH DE FR GB IT LI LU NL SE

(71) Applicant: Empresa Nacional de Electricidad, S.A.
Principe de Vergara, 187
E-28002 Madrid(ES)

(72) Inventor: Macias Yanez, Manuel
Principe de Vergara, 187
E-28002 Madrid(ES)

(72) Inventor: Fernandez Peragon, José-Vicente
Maria Lombillo, 14
E-28027 Madrid(ES)

(74) Representative: Eitle, Werner, Dipl.-Ing. et al,
Hoffmann, Eitle & Partner Patentanwälte Arabellastrasse
4
D-8000 München 81(DE)

(54) Electronic remote control and telemetry system.

(57) For use in forecasting and controlling pollution, e.g. in
the vicinity of power stations.

A radio link is established between a central station and
a plurality of remote stations. The central station includes a
main processor (1) and collects information from the remote
stations via a modulator-demodulator block (13,14) and has a
channel block (9) and a communication block (10). Corres-
ponding units are provided in each remote station, as well as
a plurality of physical parameter collectors and sensors.

FIG.1

EP 0 190 399 A2

0190399

ELECTRONIC REMOTE CONTROL AND TELEMETRY SYSTEM

The present invention relates to an electronic remote control and telemetry system, specially applicable in forecasting and controlling pollution agents. By means of this system, a series of data and values relative to a diversity of parameters and functions existing at points sufficiently distant from a central station can be obtained therein, the information being transmitted automatically over a radio which prints-out a transmission priority protocol at the various connecting points or remote stations to the central station.

Basically, the system of the invention is comprised of a central station equipped with all the necessary elements to communicate with an assembly of terminals or remote stations depending functionally from the said central station. Thus, a communications network, completely hierarchized by the central station, is formed which will cyclically make selective calls over a shared communication channel.

A preferred embodiment of this invention resides in collecting the metereological and contamination data existing in surrounding points, at different distances from the power producing plant, so that the degrees of contamination generated by said plant are known at all times in order to make the necessary corrections in the functioning thereof and to avoid or lessen the degrees of contamination as far as possible.

The system, in its preferred embodiment, is based on the configuration of a radiometry network of the atmospheric phenomena produced by a power plant both in its

0190399

nearby surroundings and in a radius close thereto, which can present a variable amplitude. The system is comprised of a determined number of collection stations capable of preparing information relative to the degree of contamination of the atmosphere at this point, radio-transmitting said information to a central station well equipped with a data processing unit as well as a mimic panel which will alert the central operator as to the different variable circumstances occurring in the surroundings of the said central.

The said collection stations will transmit, as indicated, by radio, analog and ditigal information concerning the existing contaminating parameters, as well as any other information of interest.

The central station of the system is controlled by a basic processor communicated with an auxiliary processor whose main tasks are the permanent scanning of the communication channels, the communication itself with the auxiliary processor, the maintenance of the communications, the monitoring of the operator's controls typed therein, as well as the assitance of a visual display element and the monitoring of the "watch dog" device.

The task of the auxiliary processor is to collect the information transmitted thereto by the said basic processor in a protocolized manner, preparing such information to be recorded by a printer included in the system. Likewise, this auxiliary processor is assigned the tasks of implanting and reading the time of day clock of the system maintained by an alkaline battery.

The information channels are connected to the system via a series of cards having different tasks. Thus, the system includes analog signal input cards, analog signal output cards, digital signal input cards, digital signal output cards and communications protocol cards.

The central station incorporates a group of modems for transmitting information over telephone lines.

The structure of each remote station is such that it permits the obtainment of a series of data and parameters relative to its environment, as well as to its intrinsic operative conditions for radio-transmitting them to the central station, once this has transmitted the information request signal.

Each of these remote stations comprises a processor assisted by a program and operating memory block. These stations also include a UART block (universal asynchronous receiver-transmitter) connected to a modem unit (modulator-demolulator) which communicates with the radio station. This assembly forms a communication channel permitting the radio to be linked with the central station according to network discipline established in the central station itself.

The remote stations have the characteristic of presenting a fixed array of channels, not programmable by the user, differing from that occurring in the central stations.

The remote stations also include a display/selector which optically displays the input/output states, depending on the value of a pre-selector, permitting a

0190399

functional verification to be made and the position of the STATE word, indicative of the phase of the internal operations and of the communications, to be known.

The remote stations are further provided with a series of channel cards to permit analog and digital signals to be processed both at the input to the remote station and at the output or transmission thereof to the central station. Besides, the electronic structure of these stations incorporates a "watch dog" device consisting of a monitor block permitting the equipments to be re-started if the functional cycle of the processor has been lost or if the power in the station has been lost.

The data to be transmitted are logically obtained through suitable sensors and transducers, the type of which will logically depend upon the parameter and variable to be controlled.

In this way, a radial network for transmitting data is consolidated, whereby the situations existing in the area surrounding the central station can be ascertained in a centralized manner. Thus, if this invention is used to detect contaminating factors, the power plant operator could adopt the necessary measures, such as regarding the type of fuel to be burnt in the plant, to maintain the ambient contamination below the maximum levels permitted by the administration.

Within the preferred embodiment of collecting metereological and contamination data, the system can be completed by connecting a plurality of power plants, via a communication line, to a centralized post where, apart

0190399

from controlling and counting the information received by each of the power plants from their remote collection stations, a propagation pattern of the contaminating agents can be prepared and evaluated, whereby the immissions to be produced within the next few hours can be forecasted, depending upon a metereological chart as well as on patterns proportioned by a series of program application packets. All this would configure a radial data exchange network relative to the atmospheric contamination which can take place in the surroundings of each power plant.

The local network of the system, that is the assembly formed of a signal receiving station, nearby a power producing plant, and a plurality of remote contaminating data collection stations, is a local network divided into three different parts, viz:

- Transmission assembly

- Telemetry assembly

- Display assembly

The transmission assembly will be formed of a radio network, preferably in the VHF band, having a radial configuration, so that all the remote stations of the system operate at the same frequencies.

The radio network of all the stations will be comprised of duplex mono-channel equipment. Due to the selection of operating at the same frequency, a sequencial discipline must be maintained in the communication between the remote stations and the central station, which communication will be controlled by two telemetry systems.

The central station will transmit a carrier signal continually, cyclically searching the remote stations. The searched station will then transmit the carrier signal and will, after the necessary delay, transmit its state information. As a result thereof, the radio equipments used in the system are ready for interconnection with a modem of about 200 bauds and are provided with the necessary emission control devices for connection to the telemetry system.

The task of the telemetry system is to transmit the analog and digital signals, generated in each of the remote stations, to the central station. To perform this task, the remote stations check the input information, preparing a signal or telegram to be transmitted.

As already indicated, the central station will periodically search each remote station which transmits a reply message indicative of the changes in the controlled parameters detected at the input of the station. Thus, each remote station is provided with a series of analog and digital inputs through which the electric signals, equivalent or proportional to the parameters controlled by each of the remote stations, are introduced in the telemetry system.

Hence, in a preferred embodiment, the system must include a central station capable of controlling at least 20 remote stations, and operating with a maximum 2-minute cycle time, although all these numbers and parameters can be varied, depending upon the requirements of each case.

The display assembly will preferably be fixed to the central itself or close thereto, and will be comprised of a microcomputer capable of processing information received through the telemetry system, and also controlling a mimic panel and a printer, through which the operator will obtain, in a written form, the data proportioned by the system. The mimic panel will offer a visual display of these same parameters and can activate alarms so that the power plant personnel can modify the operative conditions thereof, always maintaining the plant in an optimum functioning condition in view of the pollution generated.

As already mentioned, the system includes the possibility of centralizing at a single data processing point all the information received from the various power plants, so that with the program application packet support, the data from the various local stations of each of the power plants can be collected, and the data received can be evaluated and correlated, effecting various preparatory steps, such as contamination forecasts, depending upon the prevailing atmospheric chart, actuation of the power plant, depending on the forecasts made, and subsequent comparison between the results obtained and the prior forecasts. Stadistical analysis, data banks, etc. can also be performed.

To complete the description to be made and for a better understanding of the characteristics of the invention, a set of drawings is accompanied forming an integral part of this specification, wherein illustratively but not limiting the following is represented:

Figure 1 is a block diagram of the functional

- 8 -

0190399

arrangement of the central station of the system of the invention which, in a preferred embodiment, collects information from one of the various remote stations surrounding a power producing plant.

Figure 2 is a block diagram of the functional arrangement of the telemetry system applied to a power plant.

Figure 3 is a block diagram of the functional arrangement of each of the remote stations which, in a preferred embodiment, detects the various atmospheric and contamination parameters, radio-transmitting the information to the central station, according to the diagram of figure 2.

Figure 4 is a functional diagram of the information and preparatory support for the creation of a centralized control and forecast centre.

Figure 5 is a flowchart diagram of the analysis of the data generated and received by the system, according to the process of the preceding figure.

Figure 6 illustrates the circuitry arrangement of the central processing unit of the central station, as well as the arrangement of the keyboard controller and the visual display means.

Figure 7 corresponds to the circuit of the keyboard control card and the visual display means.

Figure 8 corresponds to the printer control card used by the central station.

Figure 9 illustrates the circuit of the analog channel processing card.

- 9 -

0190399

Figure 10 corresponds to the circuit receiving the digital inputs at the central station.

Figure 11 illustrates the circuit corresponding to the card which channelises the digital outputs from the central station.

Figure 12 represents the circuitry arrangement of the card containing the communications lines RS 232C.

Figure 13 corresponds to the circuit of the card containing the modem of the central station.

Figure 14 corresponds to the processor card of one of the remote stations.

Figure 15 corresponds to the circuit in charge of the analog input signals at each of the remote stations.

Figure 16 represents the circuitry arrangement of the digital input /output signals processed by each of the remote stations.

Figure 17 corresponds to the power supply circuit of the central station of the system.

Figure 18 illustrates the corresponding power supply included in each of the remote stations.

Referring to the mentioned figures, the electronic remote control and telemetry system of the invenion is comprised of a central station equipped with the elements so that it can be radio-connected to an assembly of terminals or remote stations depending hierarchically from this central station.

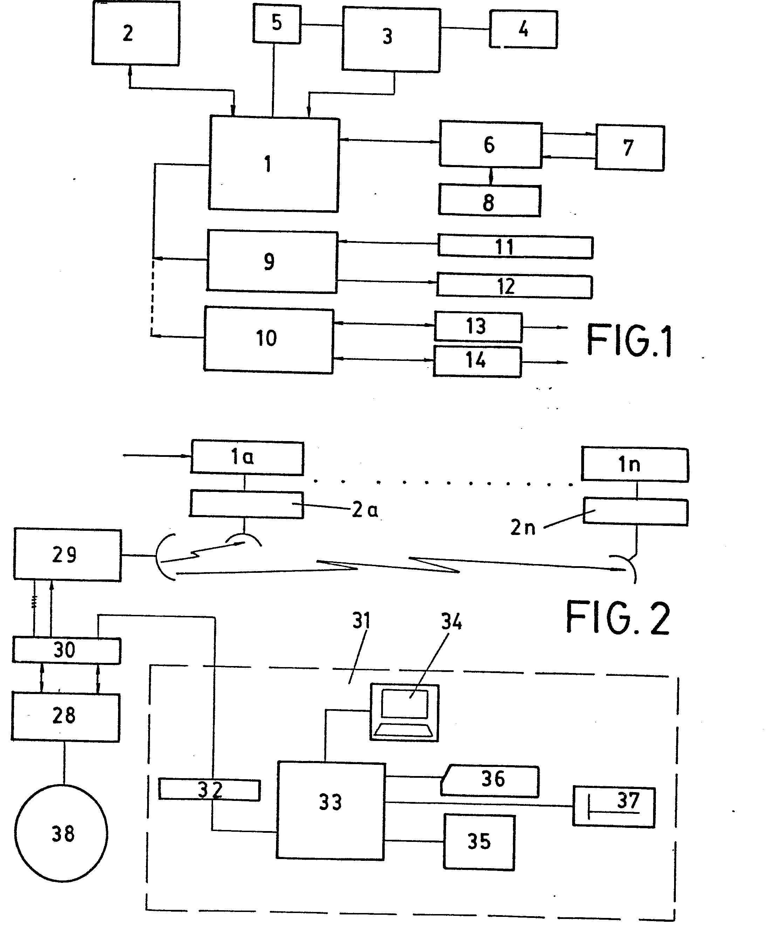

The block diagram of figure 1, showing the functional arrangement of the central station, illustrates that it is comprised of a main processor 1 connected to a data and command inserting keyboard and to visual display means, which are generally designated by the block 2. The main processor 1, electrically fed by the power supply 3 which includes the battery 4, is monitored by the "watch dog" device 5. The keyboard included in the block 2 permits the keyboard pulses to enter the processor, while the processor transmits the pertinent information displayed on the visual display means.

The processor 1 is also assisted by the auxiliary processor 6 which collects the information transmitted thereto by the main processor in a protocolized manner, and prepares it for recordal by a printer 7. The task of the auxiliary processor 6 is to implant and read the time of day clock 8 which is electrically maintained by an alkaline battery.

The processor 1 also controls the channel cards included in the block 9 and the communication card 10. The channel card 6 handles the block 11 through which the measures adopted by the system are inserted, while the pertinent commands are transmitted via the block 12 to the remote stations.

The communication card 10 handles the modems 13 and 14, respectively.

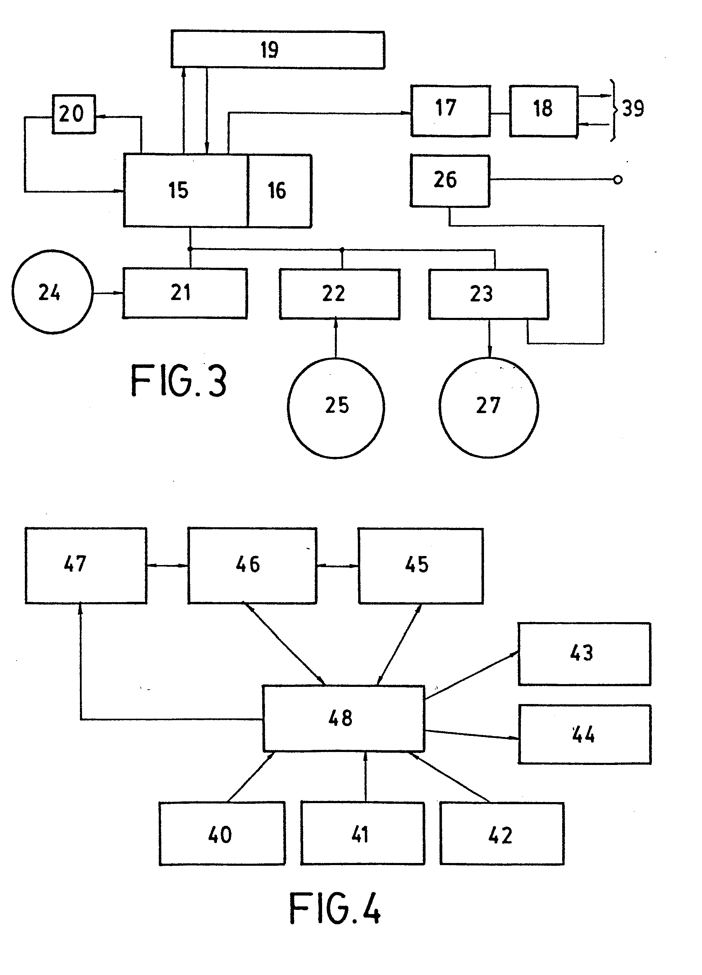

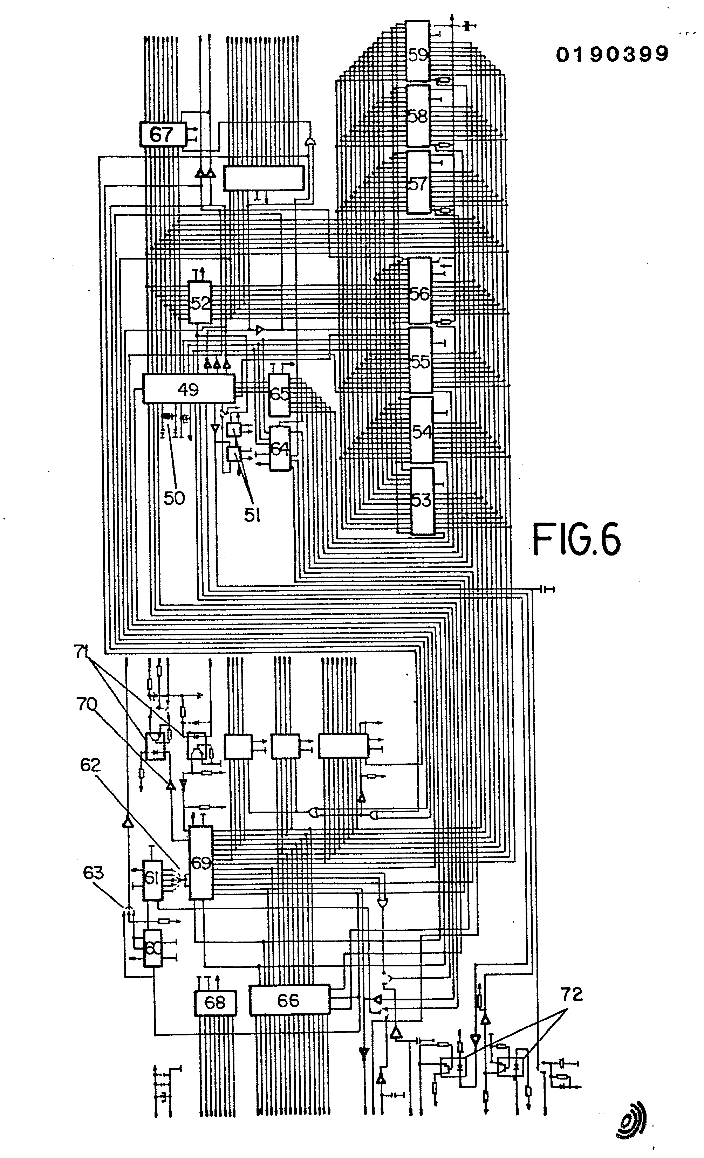

The functional arrangement of the remote stations, illustrated in figure 3 of the accompanying drawings, is formed about a central processor 15, the functioning of which is assisted by the memory block 16, which block is not programmable by the user and contains the program and operating memories.

0190399

Block 17 consists of a UART block (universal asynchronous receiver-transmitter) which is used, along with the modem 18, to communicate with a radio station, according to the established network discipline of the system.

Block 19 consisting of a display/selector also depends on the processor 15 and displays the input/output states depending upon the value of a pre-selector, thereby allowing a minimum functional verification of the equipment as well as an access to the processor state word, which will indicate the phase of the internal operations and the communications.

A watch dog device 20 is also included, which consists of a monitor for restarting the equipment if the functional cycle of the processor is lost or if any of the internal supplies of the equipment is lost.

The processor 15 controls the blocks 21, 22 and 23 which, respectively, control the analog signal inputs, the digital signal input block, and the digital signal output block. The analog input card 21 receives the signals from the measuring channels 24 through which the value of the variable to be controlled by the system is detected. In this block 21 the said measuring channels 24 undergo the analog-digital transformation. The transformed information is conveyed to corresponding physical magnitudes, in the central station once radio-transmitted, and taking into account the functions assigned to each of the remote stations, depending on how the preparation thereof has been configured.

0190399

The digital input block 22 is capable of collecting, in a preferred embodiment, up to 24 input signals, conveying the information to the processor. This block 22 receives the signals from various contact channels 25 represented in the diagram of figure 3. The digital outputs, handled by block 23, have two different tasks, viz:

a) To control the radio actuator 26 and

b) To proportion remote controls to any actuator through the block 27 which includes operating relays to, for example, calibrate the equipment of the remote station at the request of a calibration command transmitted by the central station.

In its preferred embodiment, the telemetry system for forecasting and controlling polluting agents, according to the invention, is comprised of a plurality of remote stations, referenced respectively $1_a$ ... $1_n$ communicating with a radio emitting-receiving block $2_a$.. $2_n$ provided in the remote stations and which, preferably, operate in the monochannelled VHF band.

These blocks $2_a$ ..... $2_n$ communicate logically by radio with a single emitting-receiving master station 3 in a centralized station 28 close to a power producing plant or any other industry generating, from an ecological point of view, contaminating agents.

The information collected by the radio station 29 is received via a modem in this centralized station 28, transmitting this information via the corresponding modem included in the generic block 30, to the control unit 31 including the modem 32 which processes the received signals to transmit them to a processing computer 33 which is asisted by the graphic console 34, the disk unit 35, the printer 36 and the plotter 37.

The radio communication system between the central station 28 and the remote stations $1_a \ldots 1_n$ will take place, the central station 28 continually transmitting a carrier wave. At the remote stations $1_a \ldots 1_n$, the reception/transmission switching will take place by means of the telemetry system, these remote stations transmitting a carrier signal only during the transmission of the reply message to the central station, although in principle, information is only transmitted by including a low-speed modem. The system can further be completed by transmitting spoken information, which could be of interest when adjusting the various parts of the system, or in determined emergency situations.

The central station 28 is completed by the signals transmitted thereto by an optional metereological station 38 represented in the diagram of figure 2.

The control unit collects the analog and digital information from all the remote stations and that supplied thereto by the central station 28, duly processing the information according to the control program.

In principle, the control unit 31 will attend to three different types of signals:

a) $SO_2$ concentration analog signals

b) digital signals from alarms

c) analog signals from the central station.

The received a) type signals will be entered at determined periods of time, obtaining different average values during time intervals and analyzing the results obtained, according to the established program.

Statistic operations will also be performed under the control of the program included in the microcomputer 33.

Independently thereof, when the average values of the $SO_2$ concentration signals exceed determined thresholds, illuminated markers of the mimic panel will be activated, on which all the remote stations and, optionally, a map of the area controlled by the system, would have been displayed.

By means of the peripheral devices 34, 35, 36 and 37, the user will dispose of the input/output means to control the system and he will become aware at all times of the different situations occurring in the area controlled by the remote stations.

The intrinsic structure of the central station 28 is illustrated in the block diagram of figure 1, which has already been described.

The functional arrangement of each of the remote stations $1_a$ .... $1_n$ is illustrated in figure 3 of the drawings, which has already been described.

The processor 15, through its asynchronous transmitter 17, communicates with the modem 18 controlling the 2- or 4-wired transmission line 39. The radio actuator 29 is commanded from the said digital output block 23.

Thus, due to the performance program existing in the memory 16, the remote station is capable of radio-transmitting to the central station the different state data, when so requested by the central station itself.

Thus, in accordance with this structure of the system, a series of informations relative to the contamination existing in a determined area, preferably that surrounding a power producing plant, can be compiled. As mentioned, this information can be conveyed through written documents, through the opportune printer, apart from activating various types of optical and/or aural alarms, so that the central personnel or that of contaminating industries may make the necessary rectifications to lessen the degree of ambient contamination.

Furthermore, the system includes a series of real time programs and parameter evaluation and correlation programs which, duly applied to an information evaluation computer, will increase the performance of the system.

Thus, figure 4 represents the breaking down, by blocks, of the process in real time.

The blocks of this diagram represent the following:

40. Collection of data from the collection stations.

41. Insertion of data from the Metereological Institute.

42. Operator commands

43. Results on a screen

44. Results on the printer and plotter

45. Data base from the Metereological Institute

0190399

46. Data base of parameters from the metereological stations.

47. Data base of emission values

48. Analysis and control

The block 40 for collecing data from the stations permits values to be collected from metereological stations, offering the immission values of the remote stations, and detecting, classifying and alerting as to the communication problems of the general network of the system.

Through block 41, the analysis and control blocks 48 interactively scan the values introduced through the operator's console.

The operator commands 42 permit him to have access to the information stored in the system, by recognizing a series of commands to which he has access. Besides, it offers information concerning the most significant events, of interest to the system personnel.

The results displayed on the screen 43 alert of spontaneous alarms which can occur at any time, and presents the variation of the parameters selected by the station or by the service (Metereologic, areas, spatial distributions, etc.).

The process block 44, results on a printer, facilitates summaries of the metereological values conveniently divided into times. Summaries of the emission data classified by stations are also available.

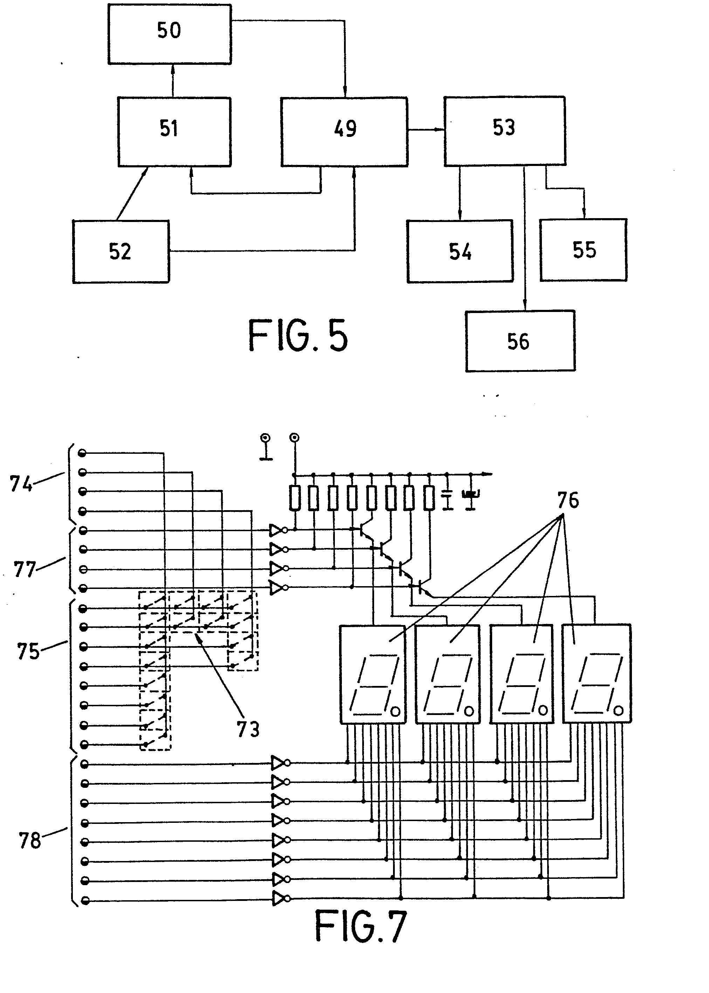

With these information data and insertion bases, the analysis and control block 48 is provided with a performance routine which is summarised in the block diagram of figure 5.

This block diagram represents the following:

49.   Comparison between predictable results and real results.

50.   Predictable data

51.   Statistical analysis

52.   Entry of historical data bases

53.   Creation of a behaviour pattern

54.   Results of metereological forecast

55.   Results of  emission forecast

56.   Results of spatial distribution forecast.

According to the flowchart of this block diagram, by analyzing and controlling the information, it is possible to validate the data collected by the process centre, before entering them into the data base itself. The information received is classified, the possible alarms are detected at the  emission levels existing in the controlled zones, the possible alarms of malfunctioning of the pick-up sensors are detected, and the historial data bases are up-dated.

By comparing the results of the forecasts, the system analyses the deviations existing between the foreseeable results and those really obtained  in the metereological stations, according to the Metereological Institute forecasts.  These results facilitate the creation and up-dating of a data base for the predictable behaviour of the possible degrees of contamination existing in a determined area.  Likewise, with this comparison routine, the prior data is studied and compared with the emission    data obtained by telemetry in each of the collection stations, more accurate aerial forecasts are made, and the results are displayed on a graphic screen as well as on a plotter.

On the basis of these comparisons, a sufficiently reliable pattern can be prepared, so that the following information can be prognosticated:

a)  prediction of the short term metereological evolution

b)  evaluation of the immission to be entered within a few hours, according to the metereological chart

c)  geographical distribution of the emission, showing the more affected areas, with a view to the possible pollution.

It must be stated that the system of this invention having a special embodiment,  facilitates an improvement in the pollution conditions of the atmosphere or ecological environment surrounding a power plant or contaminating industry, complying with the official regulations.  It is also possible, with the special embodiment. of the invention, to prepare and evaluate a propagation pattern of the contaminating agents which permit the immissions that can be produced within the next few hours, depending upon a determined metereological chart, to be forecasted.

It is further possible to evaluate the results so as to be able to reduce the contamination, if the prohibitive limits are exceeded, by utilising suitable means, for example, in the case of a power plant the use of car-

bon mixtures having a low sulphur content, ashes, etc.

The circuit arrangement of figure 6 of the drawings represents the card included in the processor 1. This circuit presents the section of the processor itself, the address demultiplexer and the wait cycle generator.

In a preferred embodiment, the microcomputer 49, such as Intel's 8085 A, has been selected. This microcomputer operates with the quartz crystal 50 having a typical frequency of 6144 KHz, proportioning the central process unit with a cycle time of 325 nanoseconds. Thus, when operating with memories having an access time of longer than 450 nanoseconds, it would be necessary to resort to a wait cycle. This wait cycle can be generated via the intergrated circuit 51.

The Data bus connects the various peripheral devices to the microprocessor. The eight address elements which are lighter in weight are demultiplexed from this data bus via the integrated circuit 52, with the intervention of the ALE command (pin No. 30 of the integrated circuit of the microprocessor 49). Thus, the demultiplexed address bus will be obtained comprising sixteen bits, which will permit the addressing of 64 K memory positions.

The memory block of this processor section of the central station is divided into 8 Kbyte modules, the card being provided with 7 frames having 28 connections, which will permit the installation of

- three 2764A type memory formats designated by 53, 54 and 55;

- An EPROM type or a RAM type memory, designated by 56.

A live CMOS type memory could also be installed at this position, which will be fed from a certain supply from a small alkaline battery resident in the power supply, permitting the data to be maintained in conditions of off system.

Finally, at positions 57, 58 and 59, live CMOS type memories are installed, having a capacity of 2 Kbytes per position.

This processor card includes a time base generating phase for serving the real time interruption system, apart from permitting the generation of the telegraphic frequency of the serial channel used in the system.

The clock output signal (CLK OUT) having a frequency of 3,072 KHz is obtained from the format 37 of the microprocessor 49, which frequency is divided into a chain formed of a biquinary counter 60 and a binary divider 61 with a division factor of $2^{12}$. Due to this structure and depending upon bridges 62 made, frequencies of 38.400 Hz, 19,200 Hz, 9,600 Hz, 4,800 Hz, 1,200 Hz and 300 Hz can be obtained, which will serve as a basis for obtaining the transmission rates of, respectively, 2,400 bauds, 1,200 Bd, 600 Bd, 300 Bd, 75 Bd and for clock rates of 3.3 milliseconds.

Also, via the suitable bridging of the terminals 63, frequencies of 3,072KHz, 614,4 KHz and 307,2 KHz can also be generated for their use in the bus of the system.

The said 3.3 millisecond signal will be utilised for the real-time interruption system.

The circuits 64 and 65 act as address decodifiers. The former acts as an 8 Kbyte segment decodifier, while the circuit 65 generates four addresses in the last 8 Kbyte segment, which are assigned to a keyboard controller circuit 66 (such as Intel's 8,279), to a serial channel, for controlling the bus of the system (decodifier 46), and to an external auxiliary channel via circuit 67 whereby the entry of  the external data to the card of the processor is controlled.

The keyboard controller and the visual display means 66 is a "suspended" integrated circuit of the data bus and permits the entry of the keyboard pulses duly codified and the refreshment of the visual display means (block designated by 2 in figure 1).  The circuit 68 decodifies the scanning.

The integrated circuit 69 comprises a 20 milliamp looped serial communications channel, permitting the asynchronous signalling of the information.  The circuits 70 and the opto couplers 71 permit the signal to be adapted so that a current insulated loop based on the auxiliary input voltage is obtained.

The opto couplers 72 insulate the processor galvanically and the processor could generate, through these opto couplers, alarm information and could also enter an external acceptance signal thereof.

The block designated by 2 in figure 1, corresponding to the keyboard and the visual display means, is schematically illustrated in figure 7 of the drawings. Reference numeral 73 thereof corresponds to sixteen keys

0190399

or buttons forming the keyboard itself. Eleven of these keys must form a numeric keyboard whilst the remaining five keys determine a functional keyboard.

Pressing of any one of these keys is detected through the scanning effected by the card of the processor (figure 6). The lines 74 enter the scanning while the eight lines 75 transmit the return information, detecting the pressing of any key.

The display 76, as illustrated in figure 7, is formed of four digits which are monitored by lines 77, while lines 78 select the segments of each of the digits of the display 76.

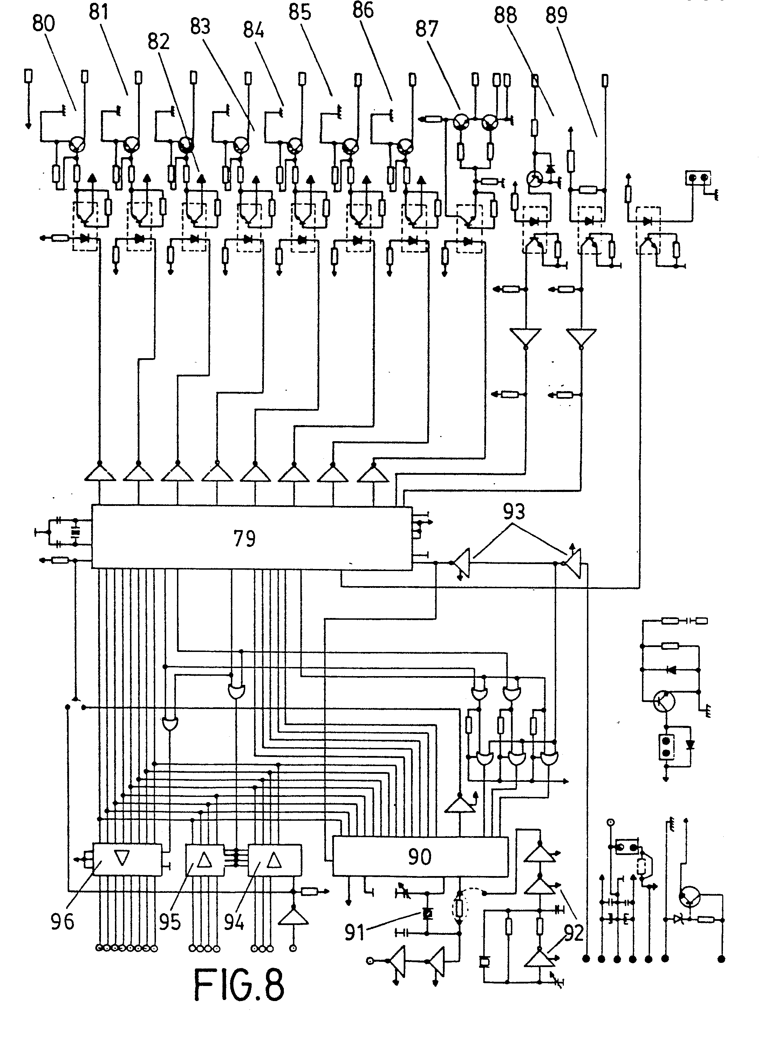

The circuitry arrangement of block 6 of figure 1, by means of which the printer of the central station is controlled, is shown in figure 8 of the drawings.

This figure 8 illustrates the presence of a microprocessor 79 which assigns this section of the system a totally autonomous nature. This microprocessor shall preferably be of the 8,748 type and consolidates the auxiliary processor of the central station. It has the following tasks:

a) to control the printer punches (point-producing electrodes due to the lack of arc between an anode and a cathode), which task is performed by the opto coupling circuits 80 to 86.

b) to control the motor of the printer and to detect the end-of-stroke by means of circuits 87, 88 and 89.

c) to consult and implant the date and hour

0190399

into the autonomous circuit 90 which is fed by the battery voltage and which, therefore, can operate even though the assembly of the system is not being fed. This circuit 90 includes its own clock controlled by the quartz 91 oscillating at a frequency of 32,768 Hz.

The clock signal can also be collected from the outside of this plate by acting, in this case, as the oscillator and the separator of the circuits 92 and 93.

d) The processor 79 communicates with the main processor 1, through the double port formed by the circuits 94, 95 and 96.

The exchange of information between processors takes place in a protocolized manner and in both directions.

As can be observed from this figure 8, all the control circuits of the electrode of the printer are galvanically insulated to prevent the protective ground noise from being injected into the mass of the processor, taking into account that the metalized printing paper is in contact with the protective ground and, therefore, constitutes an electrode during programming.

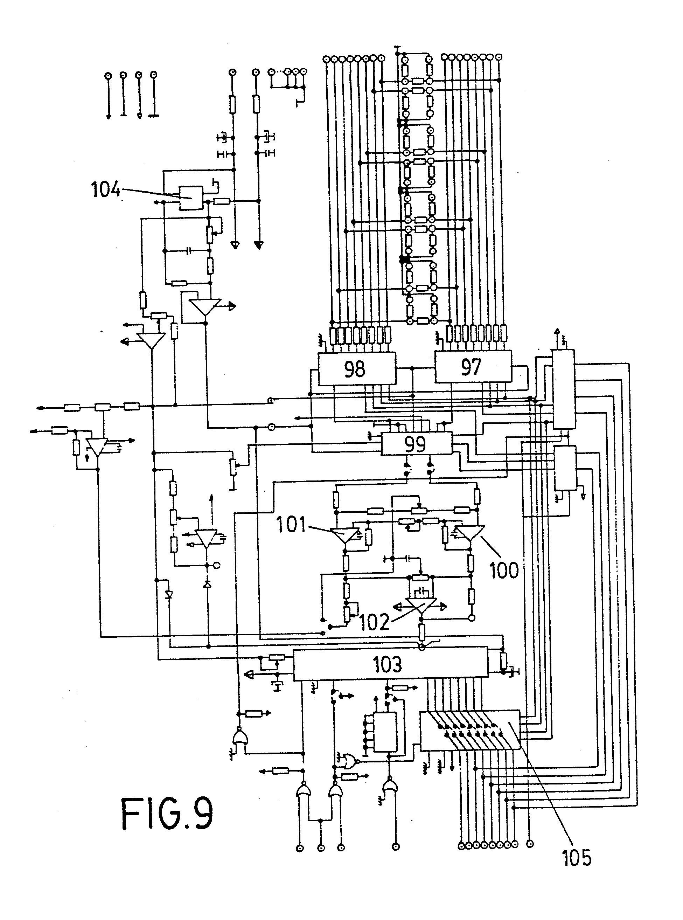

Block 9 of figure 1 includes an analog channel card, the circuitry arrangement of which is shown in figure 9. This analog channel card is capable of entering sixteen referenced analog signals, multiplexing this information via the circuits 97, 98 and 99, subjecting the signal to an instrumental amplifier formed of the circuits 100, 101 and 102, and then digitalizing the value by an analog-digital converter 103, preferably of the type utilising the method of registering by successive approximations.

0190399

The reference resistor step of this circuit 103 is fed by a pattern signal obtained from the circuit 104 and stablised by a forced heating system incorporated into the circuit.

This card permits the coupling of a conversion table, via the circuit 105 which can contain sixteen 1/4 Kbyte pages, facilitating an independent lineation for each of the sixteen measuring channels. In the event this process were not necessary, this circuit 105 will be replaced by a bridge assembly.

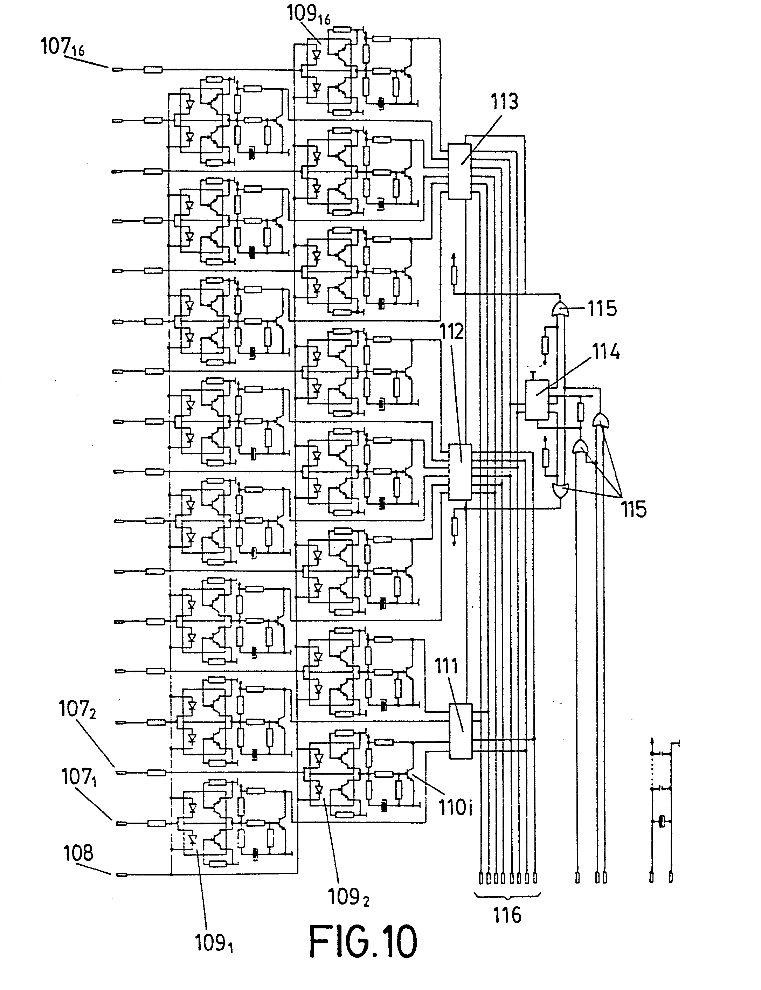

The integrated circuit 16 makes an appropriate division of the clock fequency of the bus of the system so that the clock signal required by the analog-digital converter 103 can be obtained. Digital signals enter the central station via the circuit shown in figure 10.

This circuit includes sixteen reference input signal points $107_1$, $107_2$ ..... $107_{16}$ and a common nodal point 108. These inputs act on corresponding optocoupling phases $109_1$, $109_2$ ... $109_{16}$, each of which is so connected that the input signal can have a positive, negative or alternate sine wave polarity, due to the presence of two anti-parallel optocouplers in each of the optocoupling phases $109_i$. For example, two optocoupling sections can be observed in each of the digital signal input phases, as well as a transistor $101_i$, and dependent components acting on the output signal of these circuits $109_i$.

The signals obtained from this galvanic barrier are treated by logic gates 111, 112 and 113 which are controlled by a preselector formed of the circuits 114 and 115

0190399

transmitting the information to the bus of the system via the assembly of lines 116.

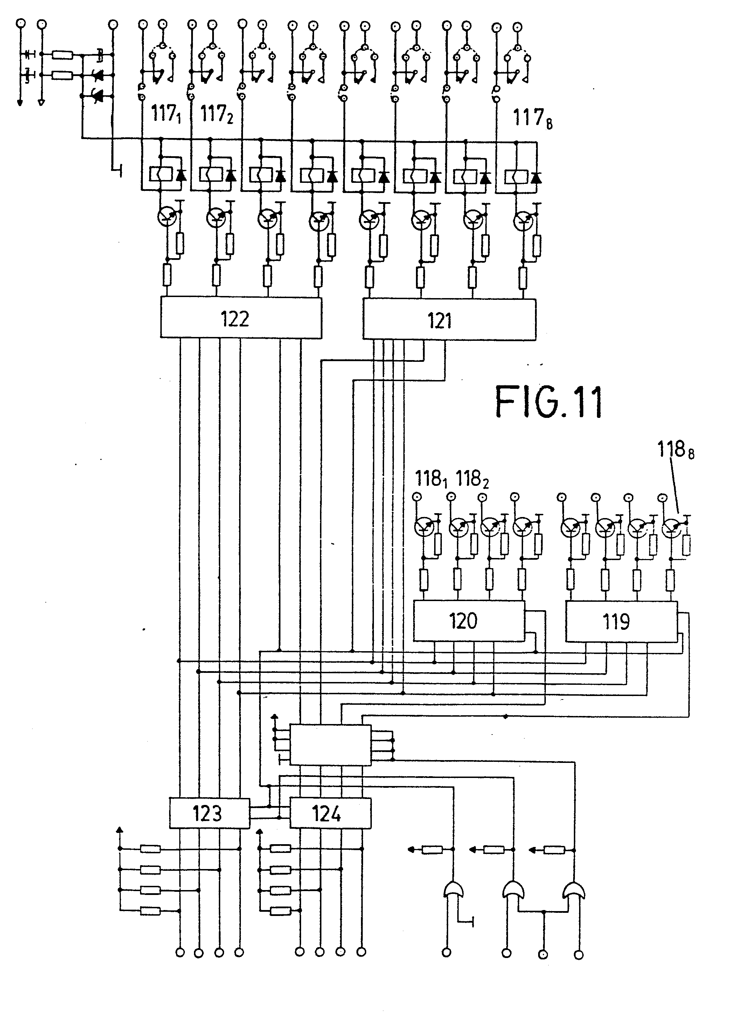

The digital output signal from the central to other pheripheral devices or remote stations are handled by the circuitry shown in figure 11.

This digital output card contains sixteen operating channels. Eight of these sixteen channels, designated by $117_1$, $117_2$... $117_8$, can be installed internally in a relay to obtain free potential contacts. The remaining eight channels designated by $118_1$, $118_2$ ... $118_8$, constitute open flip-flop outputs for controlling possible external relays.

The circuits 119, 120, 121 and 122 consist of D-type flip-flops which are activated at the upward side of the clock signal.

Each data is handled in two cycles: a first written cycle in which the information, along with a new additional information indicative of to which of the four prior circuits (119 to 122) it corresponds. After performing this operation, the information is stored in the circuits 123 or 124. A second reading cycle in which the information is placed in the corresponding storage circuit, being retained therein definitely until a new access to this same block is requested. The information stored in the flip-flops 119 to 122 is refreshed sequentially, requiring four written cycles, each of which is followed by a reading cycle.

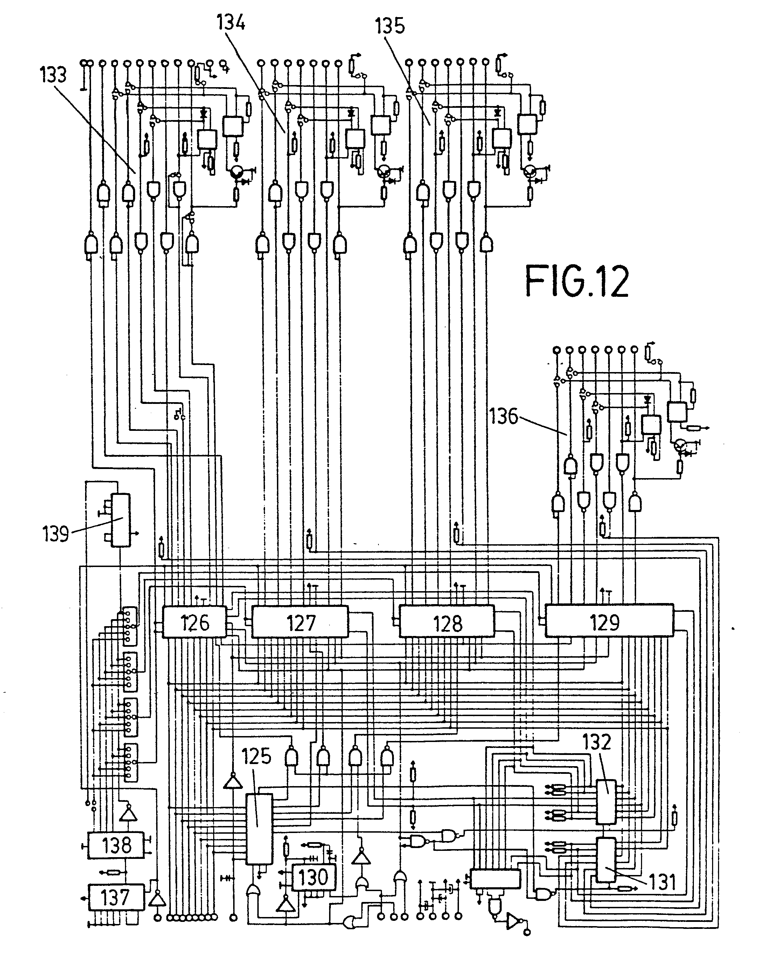

The block 10 of the central station of the system, through which the communications of the main processor are processed, is shown in the circuit of figure 12.

This block 10 is consolidated by a communications card having four RS 232 C communication lines.

The card containing these four communication lines is connected to the bus of the system handled by the main processor 1 and is processed by a sequential protocol which permits information to enter and be received by means of four serial-channeled interruptions simultaneously. A different telegraphic rate, which can be selected from bridges in the printed circuit plate can be imparted to each of the lines.

The circuit 125 constitutes the command register and the control word is initially written therein, determining which of the USART circuits 126, 127, 128, 129 constitutes the register selected for receiving the information. As from this moment onwards, a certain period of time elapses for communicating data or commands to the previously selected via. The time factor is controlled by the monostable circuit 130 which triggers at the written signal disappearing side.

The "transmission ready" and "reception ready" interruptions of the four communication links (126, 127, 128 and 129) are collected in a single interruption. The processor, once the interruption has been detected, classifies it by reading the port formed of the circuits 131 and 132, proceeding accordingly.

Each of the links 126, 127, 128 and 129 includes an assembly of adapter circuits 133, 134, 135 and 136 which conveys the signal levels to the standard levels of the international CCITT recommendation V24 equivalent to EIA RS 232 C.

By means of a bridge assembly, a current loop can be utilised, employing in this case a +5 V voltage isolated from the general power supply. The time base incorporated into this communications card adopts the clock frequency from the bus of the system , which is normally fixed at 3.072 KHz, effecting, via the circuits 137, 138 and 139, a series of divisions to obtain the base frequencies. Thus, communications can be made at 75, 200, 300, 600, 1,200 and 2,400 bauds, an identical or a different rate can be selected for each of the four links of this communications card.

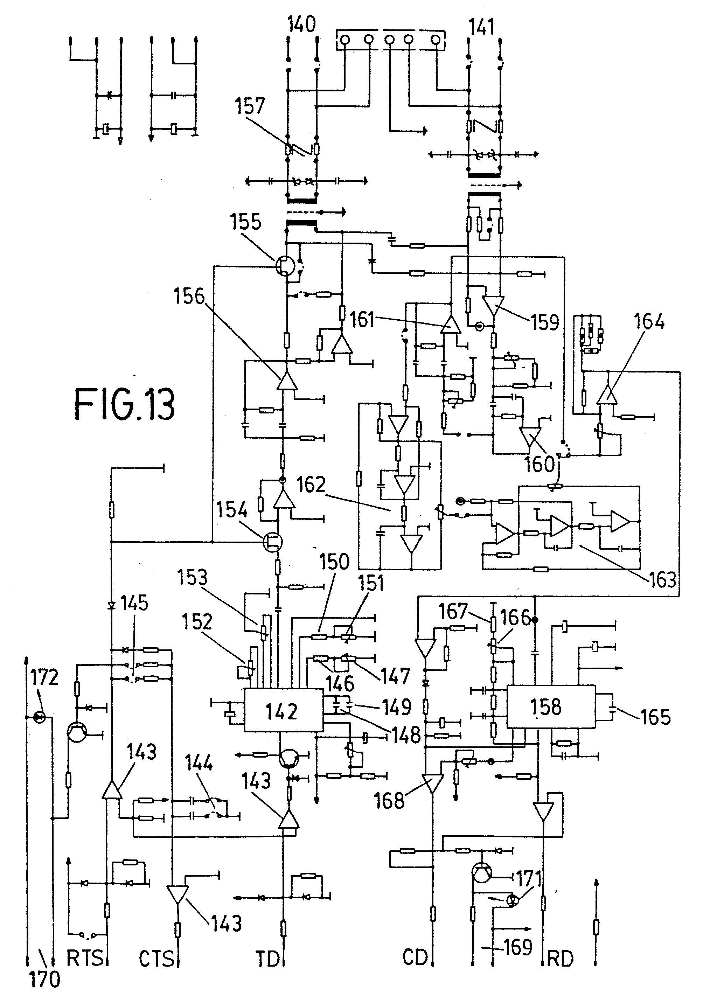

Blocks 13 and 14 of figure 1 representing the modems of the system is integrated in the circuit of figure 13, which presents two different sections.

This circuit represents the emission line 140 and the modem receiving line 141.

One of the sections of the modem is comprised of a phase-shift-modulator or a FSK modulator which is implemented by the integrated circuit 142 which, in turn, is controlled by the four-linked communications card already described with reference to the circuit of figure 12.

The operational circuits 143 operates as TD and RTS signal threshold triggers. A programmable delay can be generated between the signals RTS and CDS by means of bridges 144 and 144 and 145.

The modulator 142 operates on time constants

0190399

formed of two R-C assemblies which determine the signal rate and space periods. Thus, for example, the rate frequency is determined by the values of the resistor 146, the potentiometer 147 and the condensors 148 and 149. The space frequency is determined, in turn, by the values of the resistor 150, the potentiometer 151 and the said condensors 148 and 149. The variation can be regulated by suitably adjusting the potentiometers 152 and 153.

As can be observed in figure 13, the RTS signal acts on the gate of the field effect transistors FET 154 and 155, blocking them and producing the following effects:

- The frequency output to link 40 is prevented;

- The output threshold is opened so as to present a high impedance from the outside, permitting performance on a shared line.

As can be observed, at the output of the demodulator circuit 142 there is an operational amplifier 156 installed as an output filter, which is adjusted to a central value:

$$f_o \quad \frac{f_m + f_s}{2}$$

wherein $f_m$ represents the rate frequency and $f_s$ the space frequency.

Finally, referring to this section of the modem, the output threshold incorporates the varistors 157 to avoid field interferences which could originate from the emission cable.

The other circuit section of the modem consists of the demodulation part.

The demodulator itself is comprised of the circuit 158 comprising a PLL (phase locked loop) integrated circuit.

This section includes the differential input amplifier 159, two band-pass filters 160 and 161, two band-elimination filters 162 and 163, and an amplifier-cutter circuit 164.

This circuit permits the pass band to the demodulator 158 to be cut, whose central frequency is fixed by the circuit R-C formed of the condensor 165, the potentiometer 166 and the resistor 167. The circuit 158 proportions an open switch coupling detector permitting it to be used along with the level detector 168 to generate the signal CD and produce the line engagement RD at the level deemed fit. The received signal is thus at the terminals 169 while the transmitted signal is produced in the terminals 170. The signal receiving indication is effected by the electroluminescent diode 171 and, the transmitting indication is effected by diode 172.

The circuitry arrangement of the central station of the telemetry system which, as mentioned, controls and commands the operation and activation of each of the remote stations, has been described.

The structure of each of these remote stations will now be described.

Each of the remote stations of the system is implemented in a single card, although three differentiated sections are distinguished therein:

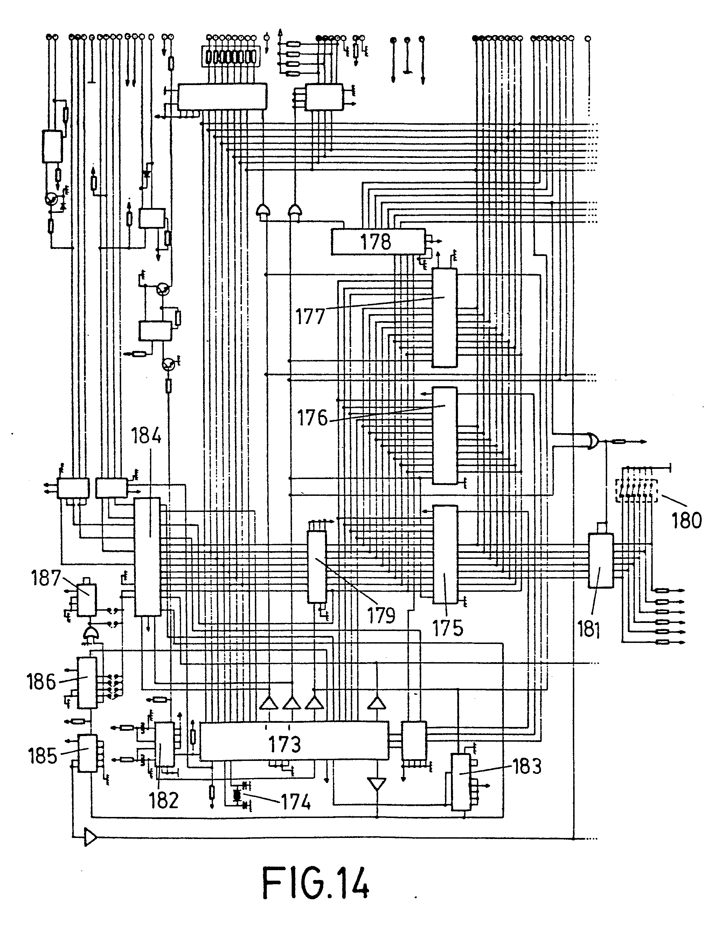

1. Processor-memory section (figure 14).

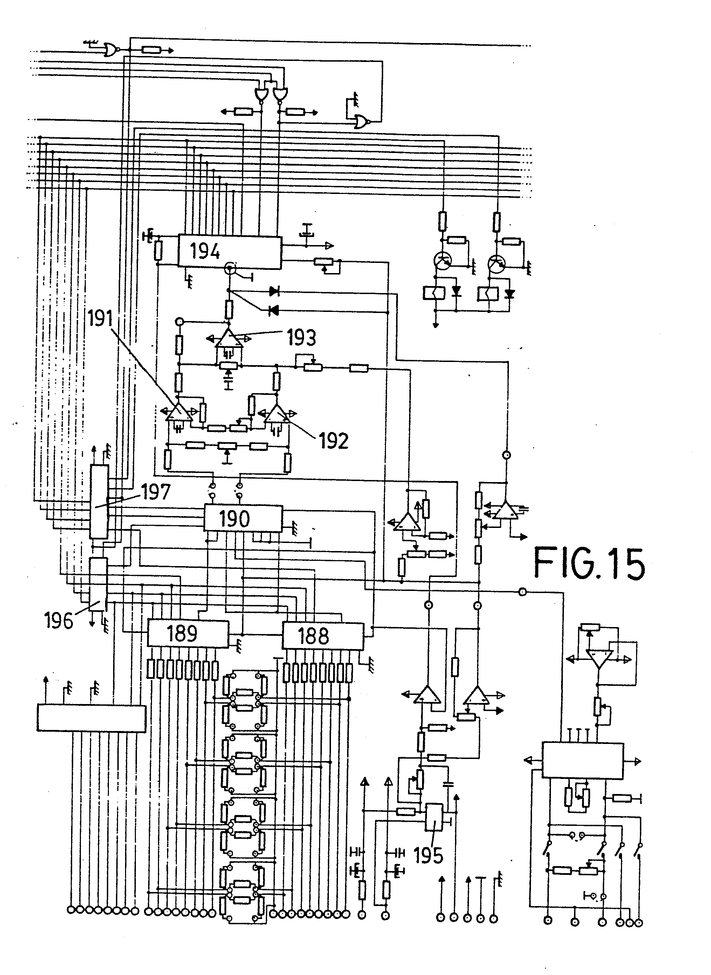

2. Analog input section (figure 15)

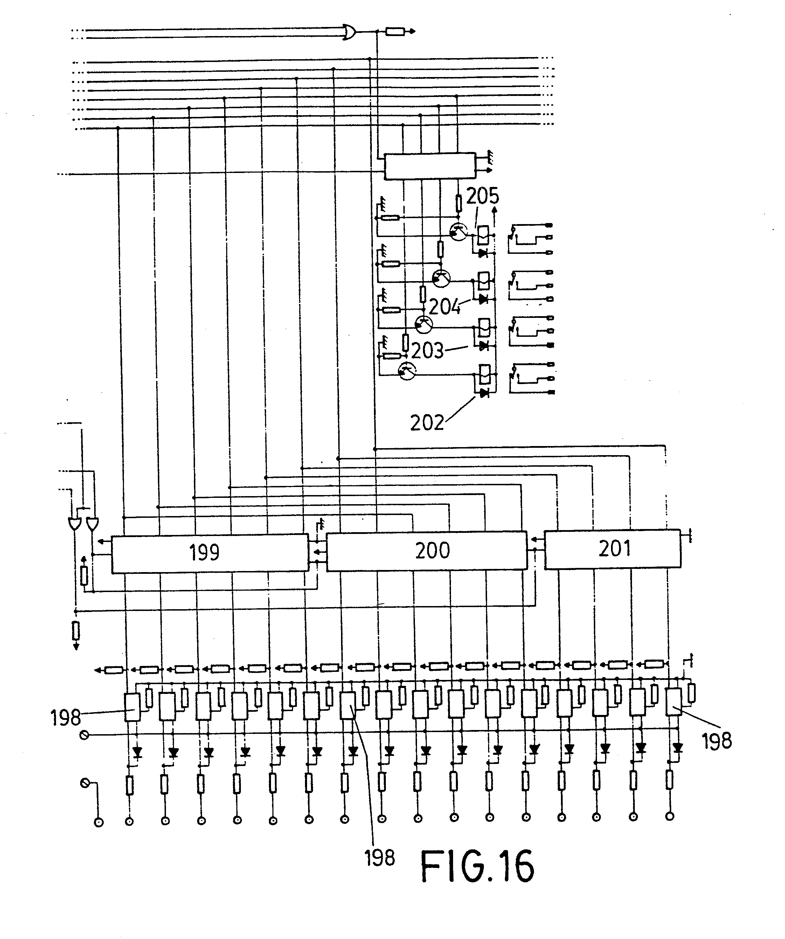

3. Digital input section (figure 16).

1. Processor-Memory Section

The processor used in each of  the remote stations is, preferably, the 8,085A circuit 173, which operates assisted by the quartz 174 at a frequency of 6,144 KHz. The memory block is positioned in the circuits 175, 176 and 177, and two EPROM memories (such as 2,764), a RAM memory having a capacity of 2 K, and a CMOS can be installed.

The address decodification is performed by the circuit 178 and the demultiplexing of the minor addresses is performed by the circuit 179.

In order to identify the terminal or remote station, so that it only answers the calls specifically directed thereto by the central station, the switch assembly 180 and the integrated circuit 181 are provided. These switches assign a position  in the hierarchy network controlling the central station and will be useful so that only this remote station attends the communications containing its specific address.

The block 20 observed in figure 3 consisting of the "watch dog" device is consolidated by the integrated circuit 182, determining a monitor system  which, if the maintenance pace is lost, will generate a refreshment of the processor initializing it and returning it to its operative conditions.

The circuit 183 consists of a wait cycle generator for the processor and acts in a fixed cycle to cycle manner.  Suspended from the data bus there is a UART circuit 184 (universal asynchronous receiver-transmitter) com-
municating with the modem of the station.

The generation frequency of the communications
is produced on the basis of said quartz and effects frequency divisions by the suitable connection of the dividing circuits 185, 186 and 187.

2. Analog input section

This part of the remote station is shown in fi-
gure 15.

The analog input section has sixteen impedance
input channels, and the terminals are ready to receive
4-20 milliamp current loops. The channel multiplexer is
formed of the three circuits 188, 189 and 190, canalizing
an output link which is applied to the operational amplifier formed of the assembly 191, 192 and 193. The signal
thus obtained is applied to the analog-digital converter
194 whose conversion table is fed by a duly processed
reference system from the integrated circuit 195.

Both the multiplexer and the converter include
a control sequence handled from the station program and
which acts via the ports 196 and 197.

3. Digital input section

This section is shown in the circuit of figure
16.

The digital input section of the remote station, as observed in this figure 16, has sixteen channels
galvanically insulated from the rest of the circuit by
opto couplers 198 which transmit the signals to the accessing ports to the bus, defined by the circuits 199, 200 and 201. This section has four outputs with relays 202 to 205, each of which enters a free potential switching for general uses. Thus, the relay 202 is normally used to energize the transmitter of the monochannel radio if the network is established by this process.

The input-output assembly thus formed can be expanded by connecting an extension card which will facilitate the remote station with sixteen outputs per open switch to handle the relays and eight additional galvanically insulated input points, whereby the remote station will achieve a handling capacity of twenty-four digital inputs and sixteen outputs.

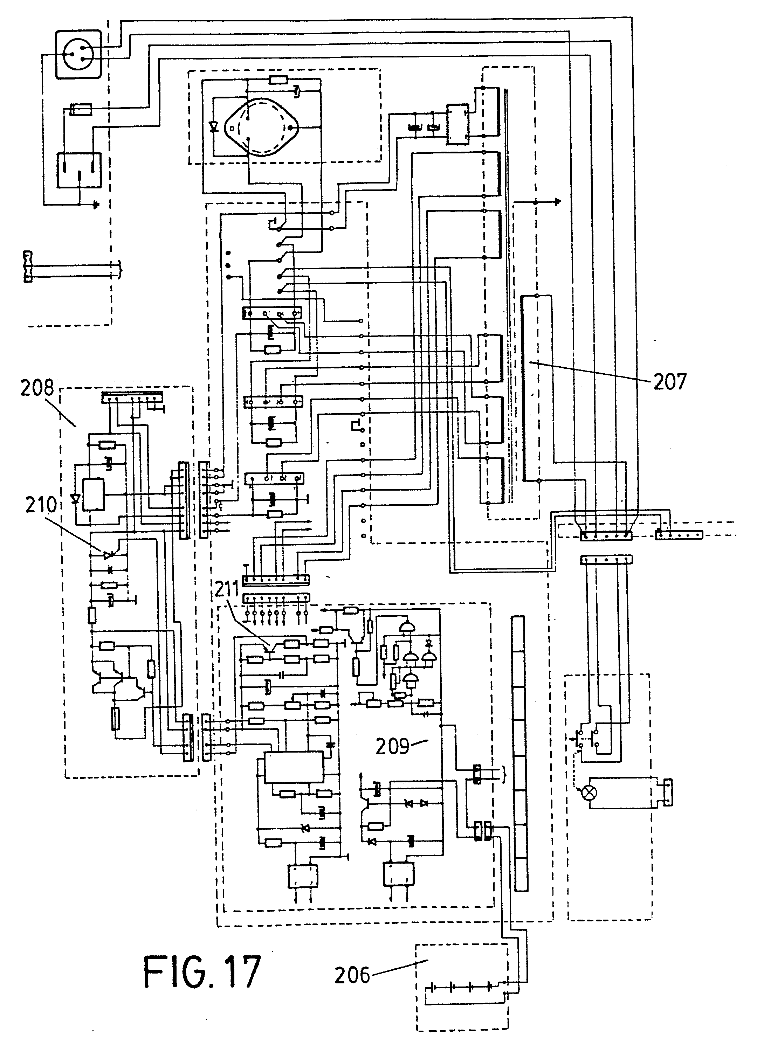

Figure 17 represents the power supply of the central station. In said figure the battery assembly 206 will supply power to the station in case of electric failure. The transformer 207 has different secondaries to supply the different sections of the central station, both the power section 208 and the supply section of the logic circuits 209.

The power stage has a protecting and limiting circuit which activates the thyristor 210 via the transistor 211 whereby an optimun security is proportioned to the power supply.

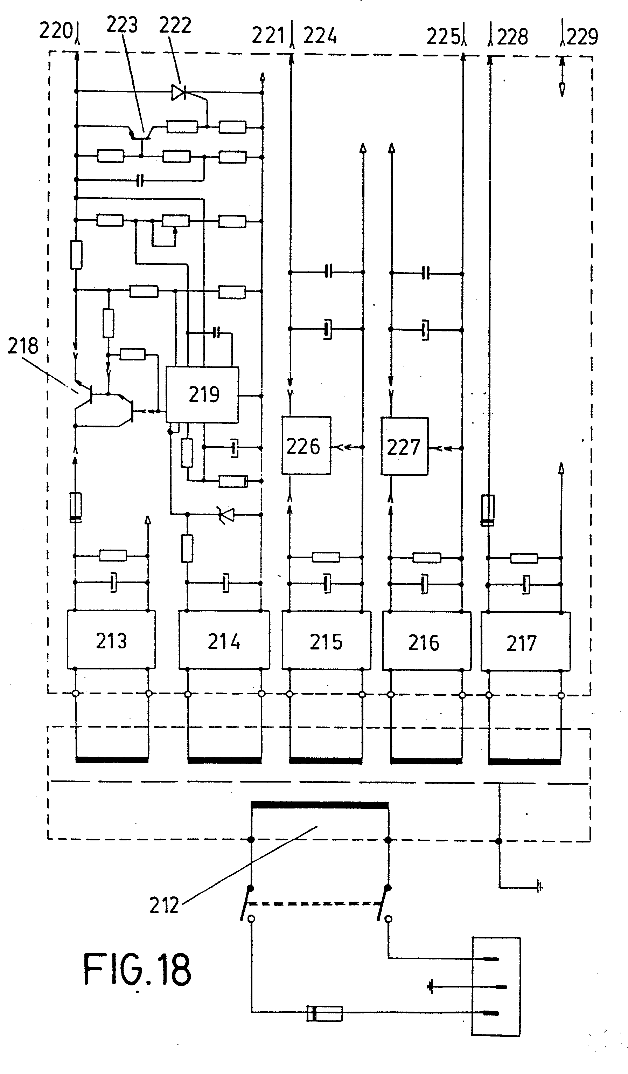

Figure 18 represents the power supply of the remote stations. This circuit includes the network transformer 212 and the rectifier units 213, 214, 215, 216 and 217. The rectifier unit 213 supplies current to the serial transistor 218 controlled from the control circuit 219, wherefore a stabilized adjusted voltage of 5 V is obtained

0190399

at the terminals 220 and 221. This supply is protected by a thyristor 222 whose port is activated by the transistor 223, protecting the supply from over-voltages.

Voltages of +15 V and -15 V, respectively, are obtained at the terminals 224 and 225, with respect to ground; due to the presence of the integrated adjusters 226 and 227, 24 volts are obtained at the terminal 228, and 12 volts are obtained at 229, although these two latter voltages cannot be adjusted and stabilized.

A system for the telemetry and remote control of different parameters and variables which is controlled and hierarchized by a central station which, as stated, controls a plurality of remote stations determining a radial hierarchized network, is consolidated.

0190399

C L A I M S

1. Electronic remote control and telemetry system, specially useful for forecasting and controlling pollution agents, characterised in that it comprises a radio communication between a central station (28) and a plurality of remote stations (1a,1b...1n), the central station being comprised of a main processor (1) assisted by a performance program stored in a memory block, said main processor (1) communicating with an auxiliary processor (6) controlling the operation of a printer (7,36) of the system, the main processor (1) receiving instructions and data from the user via a keyboard (2) and controlling the actuation of an optical display panel, said main processor (1) controlling an electronic channel card (9) connected to the bus of the system, which processes the input information of the radio-received values as well as the output of command signals for the remote stations, this exchange of information taking place through a communication card (10) which handles a modulator-demodulator block (13,14,32) adapted to a VHF-band transmitter-receiver and the transmission of the information to a data processing bank, the remote stations being configured on the basis of a fixed configuration, not programmable by the user, and including a processor (15) connected to a memory block (16), a communication channel with a radio transmitter/receiver, a display block (19) of the states of the input/output channels, a monitor device (20) of the functional cycle of the power supply, an analog-digital converter block (21) connected to the analog inputs, a digital input processing block (22) and a digital output processing

- 35 -

block (23), as well as a plurality of physical parameter collectors and sensors.

2. Electronic remote control and telemetry system according to claim 1, characterised in that on the central station (28) and the plurality of remote stations (1a...1n) there is a transmission network, a telemetry device and a display unit (2), the central station being mounted in the industry or power plant or close thereto, while the various remote stations are disposed according to a radial area distant from the central, the transmission network is configured through a VHF radio communication determined by a monochannel transmitter-receiver (2a,...2n,29) existing in all the stations, that (29) positioned in the central station emitting a carrier signal permanently and having a cyclic search program for each remote station, the telemetry device being formed of a plurality of contamination and other variable sensors joined to the analog signal and digital signal processing circuits, as well as to circuits for automatically telecalibrating the sensors, said circuits being connected to a modem which communicates with the respective monochannel transmitter existing in the remote station; and in that the operative control of each station is supported by a microprocessor, the display unit being formed of an assembly comprising a plurality of input units, a control unit, an input/output printer and a mimic panel.

3. Electronic remote control and telemetry system according to any one of the preceding claims, characterised in that the control microprocessor (1) of the central station (28) prints out a sequential discipline in the communication with the various remote stations, the remote station called by the central station transmitting carrier signal and then transmitting the information facilitated by the sensors and other active elements of the remote station.

4. Electronic remote control and telemetry system according to any of the preceding claims, characterised in that the display unit (34) is controlled by the control unit (31) which comprises a programmed microcomputer (33) for processing the information generated by the telemetry devices and radio-transmitted, facilitating the corresponding graphic and stadistic information and activating the mimic panel provided with optical display means.

5. Electronic remote control and telemetry system according to any of the preceding claims, characterised in that the electronic channel card (9) has a section for the input of analog signals with a background accuracy in the range of 0.4%, which section comprises a multiplexer, an instrumental amplifier and a digitalizer formed of a successive approximation register, the card having a digital signal input and output sections.

6. Electronic remote control and telemetry system according to any of the preceding claims, characterised in that it comprises a plurality of sub-systems which define a physical telemetry network, a processing computer of the information facilitated by each of the sub-systems which is provided with a mathematical processor assisted by an application program packet, of the real time and evaluation and correlation of values.

7. Electronic remote control and telemetry system according to any of the preceding claims, characterised in that the central station, in a preferred embodiment, is provided with skilful circuits to process twenty analog information outputs and forty digital information outputs, while the remote stations are capable of handling up to eight digital information inputs and a maximum of twelve analog information inputs, including four circuits for receiving auto-calibrating commands from the contamination sensors.

1/13

0190399

FIG.1

FIG.2

0190399

FIG.3

FIG.4

FIG.6

0190399

FIG.5

FIG.7

FIG.8

0190399

FIG.9

0190399

FIG.10

8/15

0190399

FIG.11

$117_1$ $117_2$ $117_8$

122  121

$118_1$ $118_2$ $118_8$

120  119

123  124

0190399

FIG.12

FIG.13

0190399

FIG.14

FIG.15

0190399

FIG.16

0190399

FIG. 17

FIG.18